# EUROPEAN PATENT SPECIFICATION

(11) **EP 1 518 462 B1**
(45) Date of publication and mention of the grant of the patent: **02.08.2006**
(21) Application number: 03425627.1
(22) Date of filing: 29.09.2003
(51) Int. Cl.: A23C 19/064, A01J 25/00, A01J 25/16

(54) **Apparatus and method for the salting of a whole cheese**
Vorrichtung und Verfahren zum Salzen von Käse
Appareil et procédé pour le salage d'un fromage

(43) Date of publication of application: 30.03.2005
(73) Proprietor: S.p.A. Egidio Galbani, 20066 Melzo (IT)
(72) Inventor: Lanzi, Natale c/o S.p.A. Egidio Galbani, 20149 Milano (IT)
(74) Representative: Long, Giorgio

(56) References cited:
- US-A- 4 300 446
- US-A- 4 448 116

## Description

The present invention relates to an apparatus and a method for the salting of a whole cheese.

Particularly , the present invention relates to an apparatus and a method for the salting of a whole cheese contained within a band mould.

It is known that a whole cheese is prepared by the caseification of milk. Such a technique envisages the stages of the formation of the curd, the breaking up of the latter, salting and maturation.

Particularly , the curd, formed by the addition of rennet to the milk, is firstly broken so as to remove the whey and then placed into moulds such as, for example, band moulds, so as to further free it from remaining whey and take on the definitive shape. Typical examples of said band moulds are metallic or wooden bands.

Generally, the whole cheeses which have taken on their definitive shape and have been purged of whey are subjected to the salting stage. The latter can be carried out manually by sprinkling salt onto the cheese (dry salting) or by the immersion of the whole cheese into brine (salting by immersion).

Normally, the dry salting system is characteristic of the production of soft cheeses and has a duration of a few days.

However, it has been observed that such a manual salting system leads to non-uniform salt distribution wherein overly high salt concentrations may be found in some areas of the cheese and overly dilute concentrations found in others.

Such a drawback has been resolved industrially by means of appropriate salting equipment for the whole cheeses which, besides allowing for more homogeneous salting, considerably increase the productivity of the line by automating an operation otherwise carried out manually.

However, even such a solution has drawbacks.

Particularly, such equipment does not allow the salting of the side surface which, during the operation, remains obscured by the band of the mould.

On the other hand, the automatic execution of such an operation on a whole cheese removed from the mould would not be possible, as, in such a processing stage, the cheese still has such a sufficiently soft consistency as to cause collapse.

The technical problem at the root of the present invention is therefore that of resolving the above mentioned drawbacks.

Such a problem is resolved by an equipment and by a method for the salting of a whole cheese as delineated in the attached claims.

Further characteristics and advantages of the equipment and the method subject of the present invention will be more clearly understood from the following reported description of some preferred example embodiments thereof, which are given as non limiting indications, with reference to the attached figures, wherein:
Figure 1 represents a perspective view of the equipment of the present invention with particular reference to the side surface salting device;
Figures 2 and 3 represent a cross sectional view of the device of Figure 1 in use;
Figure 4 represents an overall perspective view of the equipment of the present invention with particular reference to the side surface salting device of Figure 1 and to the salting device for the bases;
Figure 5, represents a cross sectional view of the equipment of Figure 4 in use;
Figures 6 and 7 represent a perspective view of a detail of the salting device for the bases of the apparatus of the present invention.

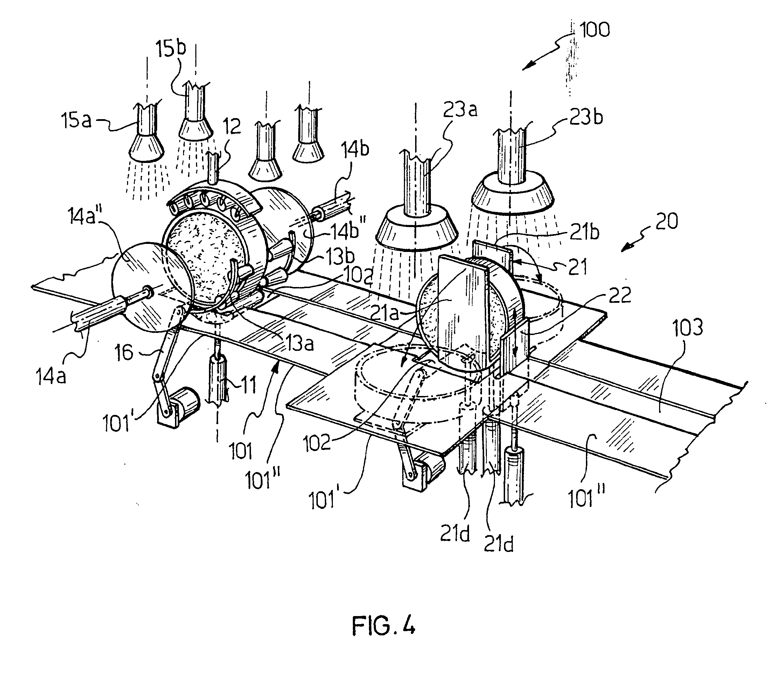

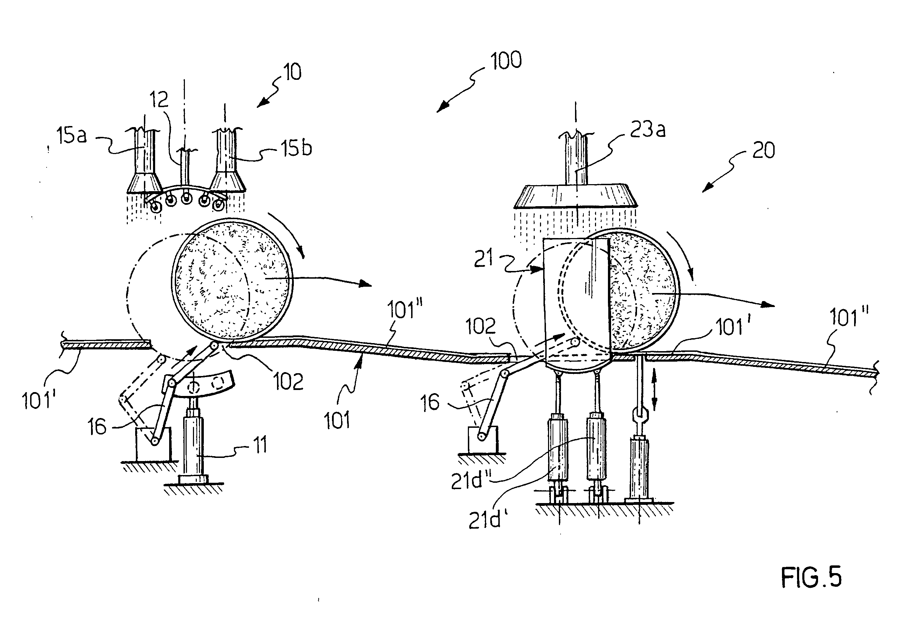

As shown in Figures 4 and 5, the equipment for the salting of a whole cheese contained within a band mould according to the present invention, generally indicated by the number 100, comprises a side surface salting device 10 and a salting device for the bases 20. Said side surface salting device 10 and said device for salting the bases 20 are connected to one another by a flat element 101.

Said flat element 101 has, respectively, at the level of the side surface salting device 10 and the salting device for the bases 20, a through hole 102.

Advantageously, said flat element 101 can also have an additional through hole 102 (not shown) placed before the side surface salting device 10. Said additional through hole 102 allows the positioning of the band mould 1, containing the whole cheese therein, prior to the latter being sent to the side surface salting device 10.

Preferably, said flat element 101 is formed from at least a part of a flat surface 101' and by at least a part of an inclined surface 101" arranged in an alternating fashion to one another.

Advantageously, the part of flat surface 101' is found at the level of the side surface salting 10 and base salting 20 devices and the through holes 102 are found substantially at the centre of said flat surface 101' parts.

Preferably, said flat element 101 has, in a substantially central position and along the entire length thereof, a grooved part 103. Said grooved part 103 and said inclined surface 101" parts assist the turning of the band mould 1 containing the whole cheese, respectively, from the through hole 102 which precedes the side surface salting device 10 to the side surface salting device 10, from the side surface salting device 10 to that for the salting of the bases 20 and from the salting device for the bases 20 out from within the apparatus 100 of the present invention to an optional storage device for the salted whole cheeses.

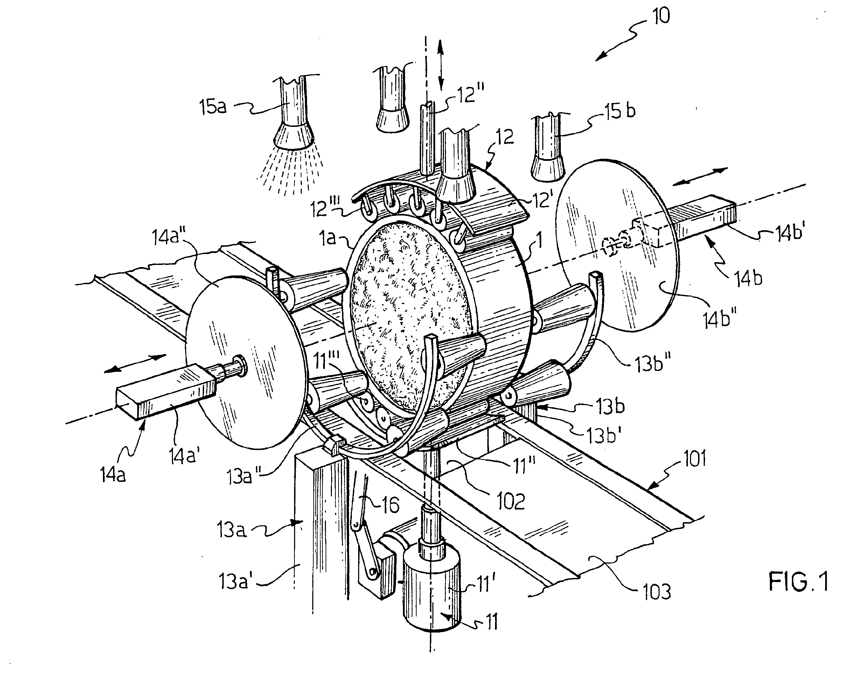

As shown in Figures 1, 2, 3, 4 and 5, the side surface salting device 10 of the present invention comprises a support means 11 able to hold a whole cheese in a band mould 1 vertically. Said support means 11 are found at the level of and substantially below the through hole 102.

Particularly , said support means 11 comprise a stemmed part 11' and a saddle part 11", wherein the saddle part 11" is located at the upper end of said stemmed part 11'. More particularly, said saddle part 11" is located substantially inside of and at the height of the through hole 102, whilst said stemmed part 11' is located beneath said through hole 102.

Said stemmed part 11' can be fixed, that is to say able to maintain the saddle part 11" always in the position described above (Figure 1) or movable, that is to say capable of conveying the saddle part 11" above or below said through hole 102.

Said saddle part 11" has a radius of curvature such as to receive, in the vertical position, the band mould 1 containing the whole cheese to be subjected to side surface salting. Said saddle part 11" comprises motor driven means of rotation 11'" able to keep the band mould 1 rotating around an axis substantially perpendicular to the base of the whole cheese contained therein.

Preferred examples of said means of rotation 11"' are cylindrical rollers. In one preferred embodiment, said saddle part 11" comprises three cylindrical rollers.

Above and suitably aligned with said support means 11, a holding means 12 may be found.

Particularly, said holding means 12 is aligned with said support means 11 in such a way as to receive the band mould containing the whole cheese in a sandwich structure and in a vertical position.

It comprises a bowed part 12' having a radius of curvature such as to hold the band mould 1 housed within the saddle part 11' of the support means 11 in a vertical position. Said bowed part 12" comprises idle rotation means 12"' able to maintain the rotation of the band mould 1 in synchrony with that of the whole cheese housed therein, and thus able to avoid the relative movement of the band mould 1 and the cheese contained therein whilst in rotation.

Said idle rotation means 12"' may also be substituted with a low friction coefficient material, itself also able to maintain the rotation of the band mould 1 in synchrony with that of the whole cheese housed therein and thus able to avoid the relative movement of the band mould 1 and the whole cheese contained therein whilst in rotation.

Said holding means 12 is movable, that is to say fitted with a system able to bring the bowed part 12" into contact with the band mould 1 when the latter is housed within the support means 11, and able to remove said bowed part 12" from the support means 11 when the band mould 1 is introduced into said support means 11 or when it is removed from the latter.

When the saddle part 11" of the support means 11 encloses the band mould 1 contained therein in such a manner as to allow maintaining the rotation of the band mould 1 in synchrony with that of the whole cheese housed therein , the aforementioned holding means 12 may be not envisaged.

The side surface salting device 10 of the present invention comprises in addition a first and second steering means 13a, 13b, placed respectively laterally outside and opposite the band mould 1 held in a sandwich structure and vertically between the support means 11 and the holding means 12.

Said first and second steering means 13a, 13b are each made up of a stem part 13a', 13b' and a steering part 13a", 13b" placed at the upper end of said stem part 13a', 13b'.

Said steering parts 13a'', 13b" are each fitted with a system of truncated conical rollers arranged in a semicircle according to a radius of curvature such as to allow the smaller base of each truncated conical roller to locate against, and in a flush position with the outer rim 1a of, the band mould 1 turned towards said smaller bases when said band mould 1 is housed in a sandwich structure between the aforementioned support means 11 and the aforementioned holding means 12.

As is shown in the embodiment of Figure 1, said steering parts 13a", 13b" are preferably formed by a semi-arched structure onto which are hinged the truncated conical rollers in such a way as to direct their smaller bases towards the band mould 1 when housed in a sandwich structure between the aforementioned support means 11 and the aforementioned holding means 12.

Said first and second steering means 13a, 13b also comprise a moving element (not shown) capable of simultaneously bringing closer and moving apart said steering parts 13a'', 13b'' from the flat element 101 and from the band mould 1 when this is housed within the support means 11. Particularly , during the introduction stage of the aforementioned band mould 1 into the support means 11, the steering parts 13a", 13b" are found in the removed position with respect to the flat element 101, whilst once the band mould 1 is placed in a sandwich structure between the aforementioned support means 11 and the aforementioned holding means 12, said steering portions 13a", 13b" are moved towards the flat element 101 of the moving element (not shown) until locate against, and in a flush position with the outer rim 1a of the band mould 1.

The side surface salting device 10 comprises in addition a first and second thrusting means 14a, 14b placed respectively latterly outside and opposite said first and second steering means 13a, 13b.

Particularly, said first and second thrusting means 14a, 14b are a piston, each formed by a stem part 14a', 14b' terminating in a disk 14a", 14b". Advantageously, said disk 14a", 14b" is motor driven and capable of rotating around the axis defined by the stem part 14a', 14b'.

The diameter of each disk 14a'', 14b" is substantially equal to that of the bases of the whole cheese contained within the band mould 1 and is smaller than that formed by the semi-arched structure of each steering part 13a'', 13b".

The actuation means of said first and second thrusting means 14a, 14b can be a hydraulic or preferably pneumatic jack or, a screw jack system.

Correspondingly, above each truncated conical roller system of the steering part 13a", 13b", are found a first and second means of supplying salt 15a, 15b.

Preferably, said first and second means of supplying salt 15a, 15b are gravity feed means.

Advantageously, said first and second means of supplying salt 15a, 15b are equipped with an opening and closing system capable of regulating the amount of salt to be supplied. Even more advantageously, said first and second means of supplying salt 15a, 15b are equipped with means capable of selecting the size of the salt grains which it is desired to supply. An example of said means capable of selecting the size of the salt grains is a sieve.

As is shown in Figures 1, 2, 3, 4 and particularly in Figure 5, the side surface salting device 10 also comprises a lever 16 capable of removing the band mould 1 containing the whole cheese from the support means 11. This lever 16 is located below the through hole 102 at the level of where the side surface salting device 10 is placed.

Particularly, said lever 16 is found in such a position as to come into contact with the part of the band mould 1 not contained within the support means 11.

As is shown in Figures 4 and 5, the apparatus 100 of the present invention also comprises in addition to the above mentioned side surface salting device 10 a device for the salting of the bases 20.

The latter comprises a means of restraint 21 capable of housing the cheese vertically within a band mould 1. Said means of restraint 21 is placed at the level of and substantially towards the centre of a through hole 102 of the flat surfaced part 101' wherein the salting device for the bases 20 is found.

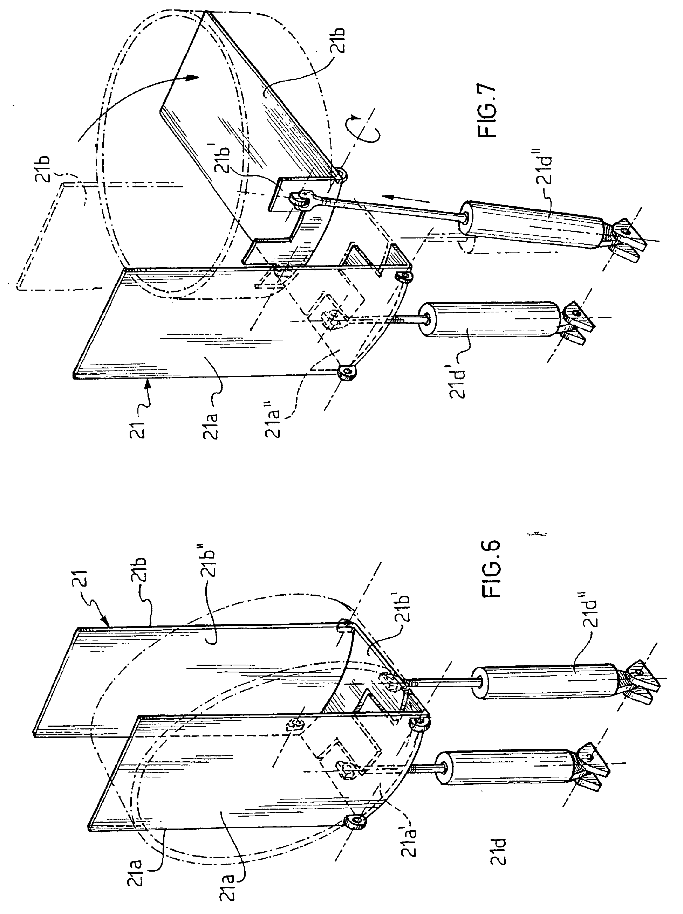

As is shown in Figures 6 and 7, the aforementioned means of restraint 21 is preferably in the form of a plough.

As is shown in Figure 6, said plough 21 is made up of two "L" shaped elements 21a, 21b facing each other in a mirror like manner with respect to a plane perpendicular to the flat element 101 and halfway between said "L" shaped elements 21a, 21b.

Particularly, when said plough 21 is in the closed or resting position, the shorter of the sides of each "L" shaped element 21a, 21b, hereinafter called the plough semi-bases 21a'and 21b', form the base of the plough 21c and the longer sides of each "L" shaped element 21a, 21b, form the side walls of the plough 21a'', 21b''.

When said plough 21 is in the aforementioned closed position, the aforementioned plough base 21c has a radius of curvature such as to receive a band mould 1 containing a whole cheese in the vertical position.

In said closed position, the plough base 21c is found substantially at the centre of the through hole 102, whilst the side walls of the plough 21a'', 21b'' are raised in a manner substantially perpendicular to the plough base 21c and are therefore projecting themselves outside of said through hole 102.

Each plough semi-base 21a', 21b' is equipped with actuation means 21d', 21d'' able to make each "L" shaped element 21a and 21b rotate alternatingly.

Particularly, each actuation means 21d', 21d" is able to make each "L" shaped element 21a and 21b rotate by 90° with respect to the direction of advancement of the band mould 1 inside the equipment 100 of the present invention.

Examples of said actuation means 21d', 21d'' are a piston actuated by a hydraulic or pneumatic jack. Said actuation means 21d', 21d'' are found below the through hole 102.

As is shown in Figure 7, when the plough 21 is found in the open, or salting position for the whole cheese bases contained within the band mould 1, an actuation means 21d'' gives rise to the aforementioned 90° rotation to the "L" shaped element 21b.

In such a manner, the band mould 1 passes from the vertical position (plough 21 in the closed position, Figure 6) to a horizontal position adapted to the salting of one base of the whole cheese contained within the aforementioned band mould 1.

Upon completion of the salting of said base, the same actuation means 21d" , which had brought the "L" shaped element 21b into the horizontal position, return the same "L" shaped element 21b to the vertical position (plough 21 in the closed position). In order to be able to carry out the salting of the other whole cheese base contained within the aforementioned band mould 1, the same 90° rotation operation is repeated for the other "L" shaped element 21a by the other actuation means 21d'.

As is shown in Figure 4, the salting device for the bases 20 also comprises a locking means 22 able to impede the exit of the band mould 1 once housed within the means of containment 21 in the closed position.

In addition, the salting device for the bases 20 is fitted with a first and second means of supplying salt 23a, 23b placed laterally outside and opposite and above the side walls 21a'', 21b'' of the plough 21 in the closed position.

Said first and second means of supplying salt 23a, 23b are wholly analogous to those described above with reference to the side section salting device 10. Preferably, said first and second means of supplying salt 23a, 23b of the salting device for the bases 20 have a salt casting width similar to the width of the base of the whole cheese to be subjected to salting.

Upon completion of the salting of the bases, the band mould 1 containing the cheese is brought out of the salting device for the bases 20 by a lever 26 wholly analogous to that described for the side section salting device 10 and itself also placed below the through hole 102.

Still with reference to Figures 1, 2 , 3, 4, 5, 6 and 7 the operation of the equipment 100 of the present invention will now be described.

A band mould 1 containing the whole cheese to be subjected to salting is firstly loaded in the vertical position, manually or automatically, inside the through hole 102 positioned firstly by the side section salting device 10 and then, by turning, it is received, still in the vertical position, within the saddle part 11' of the support means 11 of the side section salting device 10.

Upon completion of the loading stage of the band mould 1 containing the whole cheese within the support means 11, the arched part 12" of the holding means 12 are brought into contact with the band mould 1. Once the support means 11 and the holding means 12 receive the band mould 1 in a sandwich structure, the smaller bases of the truncated conical rollers, forming the steering parts 13a'', 13b'' of said first and second steering means 13a, 13b, locate against, and in a position that is flush with the edges of, the band mould 1 turned towards them.

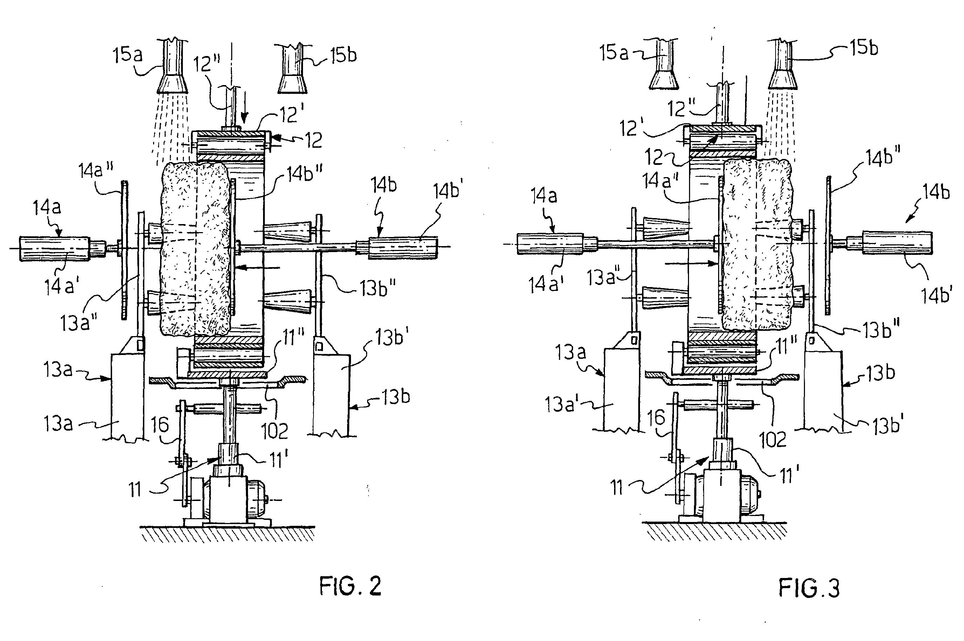

As is shown in Figures 2 and 3, the band mould 1 is set rotating by the motor driven means of rotation 11''' of the support means 11.

As is shown in Figure 2, during such rotation, the disk 14b" of the second thrusting means 14b, itself also in rotation, reach the base of the cheese turned towards it, and exert a pressure upon it such as to substantially convey the first half of the whole cheese outside of the band mould 1 in which it is contained.

Advantageously, the rotational speed of the disks 14a'', 14b'' of said first and second thrusting means 14a, 14b is equal to the speed of rotation of the band mould 1 and of the whole cheese contained therein.

The exit of said substantially first whole cheese half is guided by the steering part 13a" of the first steering means 13a itself also set in rotation.

Advantageously, the rotational speed of the steering parts 13a", 13b" is equal to that of the whole cheese half exiting from the band mould 1.

Such first exposed whole cheese half is then subjected to salting of the side surface from above thanks to the opening of the means for distributing salt 15a positioned above said second steering means 13a.

As is shown in Figure 3, following at least one complete rotation of the first exposed whole cheese half, the disk 14b" of the second thrusting means 14b withdraws whilst the disk 14a" of the first means of thrust 14a advances until reaching the base of the whole cheese turned towards it. Said disk 14a" exerts pressure onto said base such as to firstly convey the aforementioned first exposed whole cheese half inside the band mould 1, and then to make a substantially second half of the whole cheese, as yet not subjected to salting, exit from the band mould 1.

The exiting of said second whole cheese half is guided by the steering part 13b'' of the second steering means 13b itself also set in rotation.

Such second exposed whole cheese half is then subjected to the salting of the side surface from above thanks to the opening of the means of distribution of salt 15b positioned above said second steering means 13b.

Following at least one complete rotation of the second exposed whole cheese half, the disk 14a'' of the first means of trusting 14a withdraws whilst the disk 14b" of the second thrusting means 14b advances until reaching the base of the cheese turned towards it. Said disk 14b" exerts a pressure on said base such as to firstly convey the aforementioned second exposed whole cheese half inside the band mould 1.

As shown in Figure 5, upon completion of the salting of the side section, the band mould 1 is removed from the side section salting device 10 by the lever 16 and made to roll inside the groove 103 until encountering the locking means 22 of the salting device for the bases 20 and to be thus held in a vertical position inside the means of restraint 21 in the closed position.

An actuation means 21d' makes an "L" shaped element 21a rotate by 90°, with respect to the direction of advancement of the band mould 1 within the apparatus 100 of the present invention. Such rotation allows the moving of the band mould 1 from the vertical position (plough 21 in the closed position) to that of horizontal. Once the band mould 1 has reached such a position, the exposed base of the whole cheese contained therein is subjected to salting using the means of distributing salt 23a placed above said base. Following the salting of said base, the same actuation means 21d' which has brought the "L" shaped element 21a into the horizontal position, returns the band mould 1 housed therein to the vertical position.

The aforementioned operation is repeated in a wholly analogous manner for the other "L" shaped element 21b in order to be able to carry out the salting of the other base.

As shown in Figure 5, upon completion of the salting of the bases the locking means 22 is lowered and the band mould 1 is pushed outside of the salting device for the bases 20 by the lever 26.

From that set forth above, the advantages of the present invention are immediately clear.

One first advantage is that the side section salting device 10 of the present invention comprises a support means 11, which is able to hold the band mould 1 in a vertical position and rotating around an axis substantially perpendicular to the base of the cheese contained therein and able to maintain such rotation in synchrony with that of the cheese housed therein , and a first and second thrusting means 14a, 14b. In fact they permit being able to carry out the homogeneous salting of the entire side surface even when the whole cheese contained within the band mould is in the form of, not yet entirely solidified, curd.

A second advantage is that the presence of the first and second steering means 13a, 13b, in the side section salting device 10 of the present invention, allow the expedition of the entry and exit of the whole cheese half within the band mould 1 guiding and containing the cheese itself.

A third advantage is that the truncated conical shape of the rollers of the first and second truncated conical roller system of the steering part 13a'', 13b'', wherein the smaller truncated conical bases are placed flush with the outer rim 1a of the band mould 1 turned towards said steering part 13a'', 13b'', allow the whole cheese to enter into and exit from the band mould 1 with a continuous movement along the inclined surface formed by said truncated conical rollers. In addition, the above mentioned flush fitting of the steering parts 13a'', 13b" leads to a substantial absence of unevenness between the outer rims 1a of the band mould 1 and the truncated conical rollers of said steering parts 13a", 13b". That such reduces the possibility of the collapse of the whole cheese during exit from and entry into the band mould.

A fourth advantage is that the presence of the truncated conical rollers of the steering parts 13a'', 13b" in idle rotation, allow for the crushing of the salt grains distributed onto the whole cheese half emerging from the band mould.

A fifth advantage is that the whole cheese salting method of the present invention allows the uniform salting of the whole cheese emerging from the band mould.

A sixth advantage is that the equipment 100 and the whole cheese salting method of the present invention allow the achievement of the salting in a shorter period of time than that which is obtained using traditional dry salting.

An additional advantage is that the equipment 100 and the method of the present invention can be used when the curd has still not completely solidified.

It is understood that those which have been described are only some particular embodiments of the equipment 100 for the salting of a whole cheese of the present invention, to which the expert in the art will be able to carry out all the modifications necessary for the adaptation thereof to particular applications, without moreover departing from the scope of the protection of the present invention. The levers 16, 26 can be, for example, substituted by crane hooks able to transfer the band mould 1 containing the whole cheese out from the side section 10 and bases 20 salting devices.

## Claims

1. A side section salting device (10) of a whole cheese contained within a band mould (1), comprising a support means (11) able to contain said band mould (1) in a vertical position, said support means (11) being provided with motor driven means of rotation (11''') capable of keeping said band mould (1) in rotation around an axis substantially perpendicular to the base of the whole cheese contained therein and able to maintain the rotation of the band mould (1) in synchrony with that of the whole cheese housed therein, a first and second thrusting means (14a, 14b) placed respectively laterally outside and opposite the bases of the whole cheese contained within the band mould (1) and able to make substantially half of the whole cheese contained within the band mould (1) emerge, a first and second means of supplying salt (15a, 15b) positioned respectively above said first and second steering means (13a, 13b).

2. The device (10) according to claim 1, wherein said motor driven means of rotation (11''') are found within a saddle part (11'') of said support means (11) having a radius of curvature such as to receive said band mould (1) in a vertical position.

3. The device (10) according to claim 2, wherein said motor driven means of rotation (11"') are cylindrical rollers.

4. The device (10) according to any of the claims 1 to 3 comprising also a holding means (12) placed above and aligned with said support means (11) in such a manner that said support means (11) and said holding means (12) house said band mould (1) in a sandwich like structure and in a vertical position.

5. The device (10) according to claim 4, wherein said holding means (12) is provided with idle rotation means (12''').

6. The device (10) according to any of the claims 1 to 5 also comprising a first and second steering means (13a, 13b) positioned respectively laterally outside and opposite to the band mould (1) and said first and second thrusting means (14a, 14b).

7. The device (10) according to claim 6, wherein said first and second steering means (13a, 13b) are each provided with a system of truncated conical rollers.

8. The device (10) according to claim 7, wherein the system of truncated conical rollers of said first and second steering means (13a, 13b) are positioned in a semicircle according to a radius of curvature such as to allow the smaller bases of each truncated cylinder to locate against and fit flush with the outer rim (1a) of the band mould (1) turned towards said smaller bases.

9. The device (10) according to any of the preceding claims 1 to 8, wherein said first and second thrusting means (14a, 14b) are pistons.

10. An equipment (100) for the salting of a whole cheese contained within a band mould comprising the side section salting device (10) as defined in the preceding claims 1 to 9.

11. The equipment (100) according to claim 10 comprising a flat element (101) formed by at least a part of a flat surface (101') and at least a part of an inclined surface arranged alternately to one another, wherein said at least one part of a flat surface (101') is provided with a through hole (102) in correspondence with which is found the side section salting device (10) as described in the claims 1 to 9.

12. The apparatus (100) according to any of the claims 10 to 12, also comprising a salting device for the bases (20).

13. The equipment (100) according to claim 12, wherein a part of a flat surface (101') is provided with a through hole (102) in correspondence with which is found a salting device for the bases (20) of a whole cheese contained within a band mould.

14. A method for the salting of a whole cheese contained within a band mould comprising the stages of:
a) placing said band mould containing said whole cheese in a vertical position;
b) making said band mould of stage a) rotate around an axis which is substantially perpendicular to the base of the whole cheese and in such a manner that the rotation of the band mould is in synchrony with that of the whole cheese contained therein;
c) exerting pressure on one base of the whole cheese of stage b) in such a manner as to make a substantially first half of the cheese emerge from the band mould from the side opposite to the exertion of the pressure;
d) subjecting the first half of the whole cheese from stage c) to salting from above whilst in rotation;
e) exerting pressure on the other base of the whole cheese in such a manner as to make the first half of the whole cheese of stage d) re-enter into the band mould and to make a substantially second half of the whole cheese emerge from the mould from the side opposite to the exertion of the pressure;
f) subject the second half of the cheese of stage e) to salting from above whilst in rotation;
g) exerting pressure on the base of the whole cheese of the stage in such a manner as to make the second half of the whole cheese of stage f) re-enter within the band mould.

## Patentansprüche

1. Seitenabschnitt-Salzvorrichtung (10) für einen Käse, der in einer Bundform (1) enthalten ist, umfassend: eine Auflageeinrichtung (11), die in der Lage ist, die Bundform in einer vertikalen Position zu enthalten, wobei die Auflageeinrichtung (11) mit motorgetriebenen Dreheinrichtungen (11"') versehen ist, die in der Lage sind, die Bundform (1) in Drehung um eine Achse, die im Wesentlichen senkrecht zu dem Boden des in der Bundform enthaltenen Käses ist, zu halten, und in der Lage sind, die Drehung der Bundform (1) in Synchronizität mit der des darin aufgenommenen Käses zu halten, eine erste und eine zweite Schubeinrichtung (14a, 14b), die jeweils seitlich, außen und den Böden des in der Bundform enthaltenen Käses gegenüberliegend angeordnet sind und in der Lage sind, im Wesentlichen die Hälfte des in der Bundform (1) enthaltenen Käses hervortreten zu lassen, und eine erste und eine zweite Salzzuführungseinrichtung (15a, 15b), die jeweils über der ersten und der zweiten Steuereinrichtung (13a, 13b) angeordnet sind.

2. Vorrichtung (10) nach Anspruch 1, wobei die motorgetriebenen Dreheinrichtungen (11"') mit einem Sattelteil (11") der Auflageeinrichtung (11), der einen solchen Krümmungsradius hat, dass er die Bundform (1) in einer vertikalen Position aufnehmen kann, bereitgestellt sind.

3. Vorrichtung (10) nach Anspruch 2, wobei die motorgetriebenen Dreheinrichtungen (11'") zylindrische Walzen sind.

4. Vorrichtung (10) nach einem der Ansprüche 1 bis 3, des Weiteren eine Halteeinrichtung (12) umfassend, die so über der Auflageeinrichtung (11) angeordnet und mit dieser ausgerichtet ist, dass die Auflageeinrichtung (11) und die Halteeinrichtung (12) die Bundform (1) in einer sandwichartigen Struktur und in einer vertikalen Position aufnehmen.

5. Vorrichtung (10) nach Anspruch 4, wobei die Halteeinrichtung (12) mit Freidreheinrichtungen (12"') bereitgestellt ist.

6. Vorrichtung (10) nach einem der Ansprüche 1 bis 5, des Weiteren eine erste und eine zweite Steuereinrichtung (13a, 13b) umfassend, die jeweils seitlich, außen und der Bundform (1) und der ersten und der zweiten Schubeinrichtung (14a, 14b) gegenüberliegend angeordnete sind.

7. Vorrichtung (10) nach Anspruch 6, wobei die erste und die zweite Steuereinrichtung (13a, 13b) jede mit einem System von kegelstumpfartigen konischen Walzen bereitgestellt ist.

8. Vorrichtung (10) nach Anspruch 6, wobei das System von kegelstumpfartigen konischen Walzen der ersten und der zweiten Steuereinrichtung (13a, 13b) in einem Halbkreis positioniert ist, der einem solchen Krümmungsradius entspricht, der dem kleineren Boden jedes kegelstumpfartigen Zylinders ermöglicht, gegen den in Richtung des kleineren Bodens gewendeten äußeren Rand (1a) der Bundform (1) und mit diesem bündig angeordnet zu sein.

9. Vorrichtung (10) nach einem der Ansprüche 1 bis 8, wobei die erste und die zweite Schubeinrichtung (14a, 14b) Kolben sind.

10. Anlage (100) zum Salzen eines Käses, der in einer Bundform enthalten ist, die wie in den vorhergehenden Ansprüchen 1 bis 9 definierte Seitenabschnitt-Salzvorrichtung (10) umfassend.

11. Anlage (100) nach Anspruch 10, ein flaches Element (101), gebildet durch wenigstens einen Teil einer ebenen Fläche (101') und wenigstens einen Teil einer geneigten Fläche, die alternierend zueinander angeordnet sind, umfassend, wobei wenigstens ein Teil einer ebenen Fläche (101') mit einer Durchbrechung (102) versehen ist, mit der in Übereinstimmung die wie in den Ansprüchen 1 bis 9 beschriebene Seitenabschnitt-Salzvorrichtung (10) bereitgestellt ist,

12. Vorrichtung (100) nach einem der Ansprüche 10 bis 12, des Weiteren eine Salzvorrichtung für die Böden (20) umfassend.

13. Vorrichtung (100) nach Anspruch 12, wobei ein Teil einer ebenen Fläche (101') mit einer Durchbrechung (102) versehen ist, mit der in Übereinstimmung eine Salzvorrichtung für die Böden (20) eines in einer Bundform enthaltenen Käses bereitgestellt ist.

14. Verfahren zum Salzen eines Käses, der in einer Bundform enthalten ist, die folgenden Arbeitsschritte umfassend:
a) Anordnen der den Käse enthaltenden Bundform in einer vertikalen Position;
b) Drehen der Bundform des Arbeitsschrittes a) um eine Achse, die im Wesentlichen senkrecht zu dem Boden des Käses ist, in einer solchen Art und Weise, dass die Drehung der Bundform in Synchronizität mit der des darin enthaltenen Käses ist;
c) Ausüben von Druck auf einen Boden des Käses von Arbeitsschritt b) in einer solchen Art und Weise, dass eine im Wesentlichen erste Hälfte des Käses von der Seite, die der Ausübung des Druckes gegenüberliegt, aus der Bundform austritt;
d) Durchführen des Salzens der ersten Hälfte des Käses von Arbeitsschritt c) von oben, während des Drehens;
e) Ausüben von Druck auf den anderen Boden des Käses in einer solchen Art und Weise, dass die erste Hälfte des Käses von Arbeitsschritt d) wieder in den Bundform eintritt und eine im Wesentlichen zweite Hälfte des Käses von der Seite, die der Ausübung des Druckes gegenüberliegt, aus der Bundform austritt;
f) Durchführen des Salzens der zweiten Hälfte des Käses von Arbeitsschritt e) von oben, während des Drehens;
g) Ausüben von Druck auf den Boden des Käses des Arbeitsschrittes in einer solchen Art und Weise, dass die zweite Hälfte des Käses von Arbeitsschritt f) wieder in die Bundform eintritt.

## Revendications

1. Dispositif de salage de section latérale (10) d'un fromage entier contenu au sein d'un moule à bande (1), comprenant un moyen de support (11) adapté à contenir ledit moule à bande (1) dans une position verticale, ledit moyen de support (11) étant pourvu de moyens de rotation (11''') entraînés par moteur capables de maintenir ledit moule à bande (1) en rotation autour d'un axe sensiblement perpendiculaire à la base du fromage entier contenu en son sein et adaptés à maintenir la rotation du moule à bande (1) en synchronisation avec celle du fromage entier contenu en son sein, un premier et un deuxième moyen de poussée (14a, 14b) respectivement placés transversalement à l'extérieur et à l'opposé des bases du fromage entier contenu au sein du moule à bande (1) et adaptés à amener sensiblement la moitié du fromage entier contenu au sein du moule à bande (1) à émerger, un premier et un deuxième moyen de distribution de sel (15a, 15b) positionnés respectivement au-dessus desdits premier et deuxième moyens d'orientation (13a, 13b).

2. Dispositif (10) selon la revendication 1, dans lequel lesdits moyens de rotation (11"') entraînés par moteur se trouvent au sein d'une partie formant berceau (11") dudit moyen de support (11) ayant un rayon de courbure de manière à recevoir ledit moule à bande (1) dans une position verticale.

3. Dispositif (10) selon la revendication 2, dans lequel lesdits moyens de rotation (11''') sont des rouleaux cylindriques.

4. Dispositif (10) selon l'une quelconque des revendications 1 à 3, comprenant également un moyen de retenue (12) placé au-dessus dudit moyen de support (11) et aligné avec celui-ci de manière que ledit moyen de support (11) et ledit moyen de retenue (12) logent ledit moule à bande (1) dans une structure de type sandwich et dans une position verticale.

5. Dispositif (10) selon la revendication 4, dans lequel ledit moyen de retenue (12) est pourvu de moyens à rotation libre (12"').

6. Dispositif (10) selon l'une quelconque des revendications 1 à 5 comprenant également un premier et un deuxième moyen d'orientation (13a, 13b) respectivement positionnés transversalement à l'extérieur et à l'opposé du moule à bande (1) et desdits premier et deuxième moyens de poussée (14a, 14b).

7. Dispositif (10) selon la revendication 6, dans lequel lesdits premier et deuxième moyens d'orientation (13a, 13b) sont chacun pourvus d'un système de rouleaux coniques tronqués.

8. Dispositif (10) selon la revendication 7, dans lequel le système de rouleaux coniques tronqués desdits premier et deuxième moyens d'orientation (13a, 13b) est positionné en un demi-cercle suivant un rayon de courbure de manière à permettre aux bases plus petites de chaque cylindre tronqué de se positionner contre, et de s'ajuster de niveau avec, la bordure externe (1a) du moule à bande (1) tourné vers lesdites bases plus petites.

9. Dispositif (10) selon l'une quelconque des revendications précédentes 1 à 8, dans lequel lesdits premier et deuxième moyens de poussée (14a, 14b) sont des pistons.

10. Equipement (100) pour le salage d'un fromage entier contenu au sein d'un moule à bande comprenant le dispositif de salage de section latérale (10) tel que défini dans les revendications précédentes 1 à 9.

11. Equipement (100) selon la revendication 10 comprenant un élément plat (101) formé par au moins une partie d'une surface plate (101') et au moins une partie d'une surface inclinée agencées en alternance, dans lequel ladite au moins une partie de surface plate (101') est pourvue d'un trou traversant (102) en correspondance duquel se trouve le dispositif de salage de section latérale (10) tel que décrit dans les revendications 1 à 9.

12. Appareil (100) selon l'une quelconque des revendications 10 à 12, comprenant également un dispositif de salage pour les bases (20).

13. Equipement (100) selon la revendication 12, dans lequel une partie de surface plate (101') est pourvue d'un trou traversant (102) en correspondance duquel se trouve un dispositif de salage pour les bases (20) d'un fromage entier contenu au sein d'un moule à bande.

14. Procédé pour le salage d'un fromage entier contenu au sein d'un moule à bande comprenant les étapes consistant à :
a) placer ledit moule à bande contenant ledit fromage entier dans une position verticale ;
b) amener ledit moule à bande de l'étape a) à tourner autour d'un axe qui est sensiblement perpendiculaire à la base du fromage entier et de manière que la rotation du moule à bande soit synchrone avec celle du fromage entier contenu en son sein ;
c) exercer une pression sur une base du fromage entier de l'étape b) de manière à amener sensiblement une première moitié du fromage à émerger du moule à bande depuis le côté à l'opposé de celui où est exercée la pression ;
d) soumettre la première moitié du fromage entier depuis l'étape c) à un salage depuis le dessus tandis qu'elle est en rotation ;
e) exercer une pression sur l'autre base du fromage entier de manière à amener la première moitié du fromage entier de l'étape d) à entrer de nouveau dans le moule à bande et amener sensiblement une deuxième moitié du fromage entier à émerger du moule depuis le côté à l'opposé de celui où est exercée la pression ;
f) soumettre la deuxième moitié du fromage de l'étape e) à un salage depuis le dessus tandis qu'elle est en rotation ;
g) exercer une pression sur la base du fromage entier de l'étape de manière à amener la deuxième moitié du fromage entier de l'étape f) à entrer de nouveau dans le moule à bande.
